(19) Europäisches Patentamt European Patent Office Office européen des brevets

(11) **EP 3 063 978 B1**

(12) **EUROPEAN PATENT SPECIFICATION**

(45) Date of publication and mention of the grant of the patent:
**31.07.2019 Bulletin 2019/31**

(21) Application number: **14858648.0**

(22) Date of filing: **29.10.2014**

(51) Int Cl.:
***H04W 36/00*** (2009.01)

(86) International application number:
**PCT/US2014/062851**

(87) International publication number:
**WO 2015/066146 (07.05.2015 Gazette 2015/18)**

(54) **MEASUREMENT MANAGEMENT IN SMALL-CELL SYSTEMS**

MESSUNGSVERWALTUNG IN KLEINZELLIGEN SYSTEMEN

GESTION DE MESURES DANS DES SYSTÈMES À PETITES CELLULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2013 US 201361898049 P**
**29.07.2014 US 201414445222**

(43) Date of publication of application:
**07.09.2016 Bulletin 2016/36**

(73) Proprietor: **Google Technology Holdings LLC**
**Mountain View, CA 94043 (US)**

(72) Inventors:
• **NORY, Ravikiran**
**Buffalo Grove, IL 60089 (US)**
• **KRISHNAMURTHY, Sandeep, H.**
**Mountain View, CA 94040 (US)**
• **NANGIA, Vijay**
**Algonquin, IL 60102 (US)**
• **NARASIMHA, Murali**
**Vernon Hills, IL 60061 (US)**
• **NIMBALKER, Ajit**
**Buffalo Grove, IL 60089 (US)**

(74) Representative: **Betten & Resch**
**Patent- und Rechtsanwälte PartGmbB**
**Maximiliansplatz 14**
**80333 München (DE)**

(56) References cited:
**EP-A1- 2 439 975     WO-A1-2012/118414**
**WO-A1-2013/013618     US-A1- 2009 005 029**
**US-A1- 2011 151 919     US-A1- 2013 223 272**

• **MEDIATEK INC.: 'Methods for Efficient Discovery of Small Cells' 3GPP TSG-RAN WG1 #72,R1-130225 28 January 2013, ST JULIAN'S, MALTA, XP050663605 Retrieved from the Internet: <URL:http://www.3gpp.org/ftp/tsg_ran/wg1_rl 1/TSGR1_72/Docs/R1-130225.zip> [retrieved on 2013-02-01]**

**Description**

TECHNICAL FIELD

The present disclosure is related generally to mobile-device network utilization and, more particularly, to a system and method for enhancing user-device measurement of cell attributes.

BACKGROUND

Mobile communications devices such as cellphones are now smaller than anyone could have imagined just ten years ago. Some of the credit for this diminutive sizing and convenience belongs to the advances that have taken place in battery technology. However, regardless of battery capacity and power density, efficient usage of what battery power exists is also important in allowing device providers to utilize smaller batteries onboard.

One important consumer of power in any wireless communication device is the radio-frequency transmitter. Naturally, the further away the potential recipient of the transmitted signals is, the more powerful the transmitted signal must be. In this regard, devices that utilize a cellular communications network need only communicate with the nearest suitable cell, and as the device moves, and other cells come into range and become more suitable, the device may be "handed over" to another cell to continue communications.

This process generally requires that the device monitor nearby cells in addition to the cell with which the device is currently in communication. This current cell, sometimes referred to as the primary cell, may configure the device to monitor the other cells, sometimes called neighboring or secondary cells, in a certain manner. Currently, such configurations entail supplying a list of trigger conditions and instructing the device to measure the signal characteristics of the other cells and, when triggered to do so, report those measurements back to the primary cell.

The present disclosure is directed to a system that may enhance cell measurement and report triggering. However, it should be appreciated that any such benefits are not a limitation on the scope of the disclosed principles or of the attached claims, except to the extent expressly noted in the claims. Additionally, the discussion of technology in this Background section is merely reflective of inventor observations or considerations and is not intended to be admitted or assumed prior art as to the discussed details. Moreover, the identification of the desirability of a certain course of action is the inventors' observation, not an art-recognized.

The invention involves two interrelated methods and an apparatus, according to the appended independent claims. Further embodiments are provided in the dependent claims.

The document EP 2 439 975 A1 describes a measurement reporting method for a Closed Subscriber Group (CSG) cell and a corresponding User Equipment (UE). The method comprises the following steps that: after detecting a neighboring accessible CSG cell which is not on a frequency in a measurement configuration, a UE in a connected state requests a network for a measurement configuration by reporting indication information which contains the frequency information of the accessible CSG cell and/or the bandwidth information of the accessible CSG cell. The present invention solves the problem about the measurement and reporting of a CSG cell by a UE, so that a network is able to make a decision in time according to a measurement report, satisfying the requirement of the UE on mobility.

BRIEF DESCRIPTION OF THE SEVERAL VIEWS OF THE DRAWINGS

While the appended claims set forth the features of the present techniques with particularity, these techniques, together with their objects and advantages, may be best understood from the following detailed description taken in conjunction with the accompanying drawings of which:

Figure 1 is a generalized schematic of an example device with respect to which the presently disclosed innovations may be implemented;

Figure 2 is a network schematic showing an environment within which embodiments of the disclosed principles may be implemented;

Figure 3 is a frame and slot diagram showing the timing of discovery-signal transmission;

Figure 4 is a network schematic showing a cellular environment supporting multistate cells within which embodiments of the disclosed principles may be implemented; and

Figure 5 is a flowchart showing a process of measurement-report triggering in accordance with various embodiments of the disclosed principles.

DETAILED DESCRIPTION

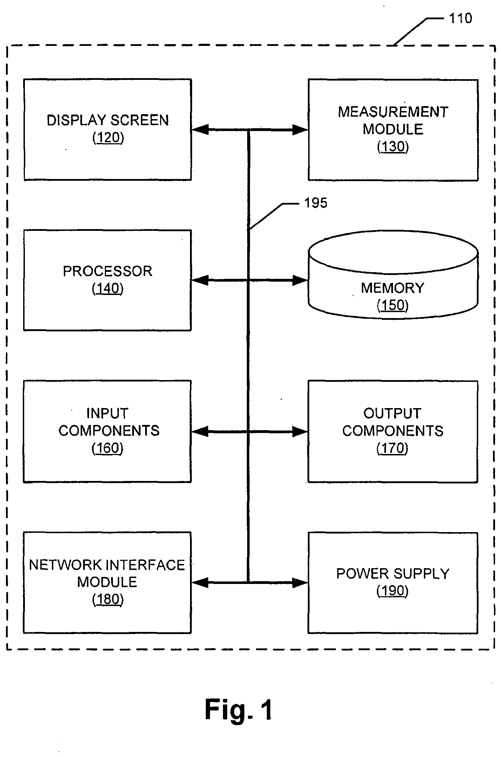

Turning now to a more detailed discussion in conjunction with the attached figures, techniques of the present disclosure are illustrated as being implemented in a suitable environment. The following description is based on embodiments of the disclosed principles and should not be taken as limiting the claims with regard to alternative embodiments that are not explicitly described herein. Thus, for example, while Figure 1 illustrates an example mobile device with respect to which embodiments of the disclosed principles may be implemented, it will be appreciated that many other devices such as, but not limited to, laptop computers, tablet computers, personal computers, embedded automobile computing systems, and so on, may also be used.

The schematic diagram of Figure 1 shows an exemplary device 110 forming part of an environment within which aspects of the present disclosure may be implemented. In particular, the schematic diagram illustrates a user device 110 including several exemplary components. A user device used in an example of the disclosed principles, e.g., user device 110, may sometimes be referred to as user equipment ("UE"). It will be appreciated that additional or alternative components may be used in a given implementation depending upon user preference, cost, and other considerations.

In the illustrated embodiment, the components of the user device 110 include a display screen 120, a measurement module 130, a processor 140, a memory 150, one or more input components 160, and one or more output components 170. The input components 160 may include speech- and text-input facilities, for example, while the output components 170 may include visual- and audible-output facilities, e.g., one or more displays and audio outputs.

The processor 140 may be any of a microprocessor, microcomputer, application-specific integrated circuit, or the like. For example, the processor 140 can be implemented by one or more microprocessors or controllers from any desired family or manufacturer. Similarly, the memory 150 may reside on the same integrated circuit as the processor 140. Additionally or alternatively, the memory 150 may be accessed via a network, e.g., via cloud-based storage. The memory 150 may include a random-access memory and a read-only memory, such as a hard drive or flash memory.

The information that is stored by the memory 150 can include program code associated with one or more operating systems or applications as well as informational data, e.g., program parameters, process data, etc. The operating system and applications are typically implemented via executable instructions stored in a non-transitory computer-readable medium (e.g., memory 150) to control basic functions of the electronic device 110. Such functions may include, for example, interaction among various internal components and storage and retrieval of applications and data to and from the memory 150.

By way of example, the measurement module 130 may comprise an instance of code executed by the processor 140 wherein the code has been retrieved from read-only memory in the memory 150. While running, the code may be stored in random-access memory of the memory 150, and the processor may also use the random-access memory to temporarily hold process parameters and data.

The illustrated device 110 also includes a network interface module 180 to provide wireless communications to and from the device 110. The network interface module 180 may include multiple communications interfaces, e.g., for cellular, WiFi, broadband and other communications. A power supply 190, such as a battery, is included for providing power to the device 110 and its components. In an embodiment, all or some of the internal components communicate with one another by way of one or more shared or dedicated internal communication links 195, such as an internal bus.

Further with respect to the applications, these typically utilize the operating system to provide more specific functionality, such as file-system service and handling of protected and unprotected data stored in the memory 150. Although many applications may govern standard or required functionality of the user device 110, in many cases applications govern optional or specialized functionality, which can be provided, in some cases, by third-party vendors unrelated to the device manufacturer.

Finally, with respect to informational data, e.g., program parameters and process data, this non-executable information can be referenced, manipulated, or written by the operating system or an application. Such informational data can include, for example, data that are preprogrammed into the device during manufacture, data that are created by the device, or any of a variety of types of information that are uploaded to, downloaded from, or otherwise accessed at servers or other devices with which the device 110 is in communication during its ongoing operation.

In an embodiment, the device 110 is programmed such that the processor 140 and memory 150 interact with the other components of the device 110 to perform a variety of functions. The processor 140 may include or implement various modules and execute programs for initiating different activities such as launching an application, transferring data, and toggling through various graphical user interface objects (e.g., toggling through various icons that are linked to executable applications). As noted above, one such module or program is the measurement module 130, which will be explained in greater detailed below.

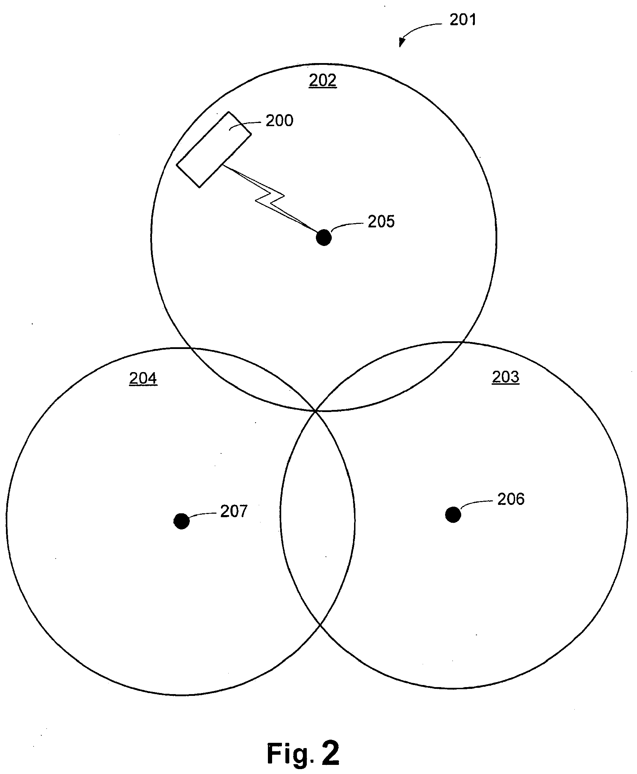

Turning to Figure 2, a simplified network schematic is illustrated, showing a mobile user device 200 and a cellular environment 201 within which the device 200 operates. The illustrated environment 201 includes a primary cell 202 as well as a first secondary or neighbor cell 203 and a second secondary cell 204. The primary cell 202 is designated as such because the user device 200 is currently in communication with the cell 202.

Each cell 202, 203, 204 is generated by a respective cell node 205, 206, 207 comprising the hardware and software needed to send and receive wireless communications to and from a cellular user device and to communicate in turn with a communication network over which the device user's messages are sent and received.

With respect to the secondary cells 203, 204, the user device 200 may periodically evaluate the signal strength of these cells as seen at the user device 200 and report the measured values to the node 205 of the primary cell 202. Generally, the node 205 will configure the device 200 as to the conditions under which to make such measurements by supplying signal strength-based trigger conditions. By comparing the signal strength that the user device 200 experiences from the primary cell 202 with the signal strength that the user device 200 experiences from the secondary cells 203, 204, the node 205 of the primary cell 202 is able to manage the timing and target of any hand-off operation as the mobile user device 200 moves into another cell.

Within certain protocols, e.g., the Long Term Evolution ("LTE") Rel12 protocol for cellular systems and communications, cells may exist in one of multiple states including an active state and a dormant state. A discovery channel and signal may be used to convey the cell mode when a cell can operate in multiple states. In general, in the dormant state, the periodicity of periodic non-UE specific transmissions (e.g., synchronization signals, transmissions related to system information) from the cell can be longer (e.g., 1ms every 100ms or 5ms every Is) as compared to the periodicity of such transmissions when the cell is in the active state (e.g., 1ms every 5ms or multiple symbols in every 1ms subframe).

Enabling a cell to occasionally operate in a dormant state not only reduces overall energy consumption of the cell but also reduces overall network interference. The dormant and active states may be implemented in a number ways. For example, when operating in dormant state, a cell may periodically transmit a synchronization signal. The cell may also transmit, at a longer periodicity, a physical broadcast channel (usually referred to as a discovery channel) that is associated with the discovery signal. When the cell is in the active state, it can transmit additional synchronization signals and broadcast channels with a shorter periodicity when compared to the dormant state.

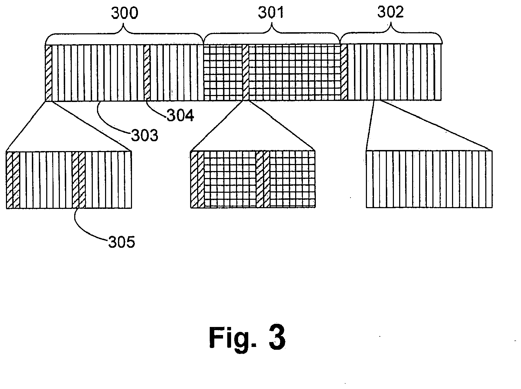

Figure 3 provides a timing diagram illustrating this approach. The figure shows multiple radio frames 300, 301, 302, some transmitted when the cell is in an active state (300, 302), and others transmitted when the cell is in a dormant state (301). In LTE, each radio frame has 10ms duration and consists of 20 slots 303 numbered from 0 to 19. In the illustrated example, each slot is 0.5ms. Consecutive slots can be referred to as subframes (e.g. slot 0, 1 is one subframe, slots 2, 3 another subframe, and so on). The radio frames may be indexed with a System Frame Number ("SFN").

In this example, when the cell is in the dormant state, it transmits a discovery channel 304 in every 15th radio frame (that is, in radio frames satisfying SFN mod 15 = 0). The discovery signal 305 may be present in all slots or only a subset of slots within that radio frame (e.g., slots 0, 1, 9, 10). The discovery-signal transmissions may be the only periodic non-UE specific transmissions made by the cell in dormant state.

When the cell is in the active state, it transmits all the synchronization signals and broadcast channels required to support UEs and any required legacy UEs. Therefore, in the active state, at least the following periodic non-UE specific transmissions are made by the cell:

- Primary Synchronization Signal ("PSS") in slot 0 and 10 of every radio frame;

- Secondary Synchronization Signal ("SSS") in slot 0 and 10 of every radio frame;

- Physical Broadcast Channel carrying MasterInformationBlock in slot 1 of every radio frame in active state;

- Physical Downlink Shared CHannel ("PDSCH") carrying SystemInformationBlock1 information in every alternate radio frame (i.e., radio frames satisfying SFN mod 2 = 0) and associated Physical Downlink Control CHannel ("PDCCH") to indicate the PDSCH resource blocks ("RBs");

- PDSCH carrying other system information blocks in a plurality of radio frames conformant with the system information scheduling mechanisms in LTE Rel8/9/10/11 and associated PDCCH to indicate the PDSCH RBs; and

- Common Reference Signals ("CRS") in every slot of every radio frame except for the second slot in a Multi-Broadcast Single-Frequency Network ("MBSFN") subframe. (MBSFN subframe information is typically signaled in SIB2.)

Given the above list, a cell in the active state 302 has at least one transmission in every subframe, i.e., a periodicity of at least once every 1ms. As indicated above, CRS may not be transmitted in the second slot of some subframes (MBSFN subframes). In addition to the transmissions in the above list, the cell can also transmit the discovery signal when in the active state. If the discovery signal has a structure that is detectible in fewer slots than the slots required for detecting PSS/SSS, then the transmission of the discovery signal in the active state will help in reducing the measurement burden of UEs making inter-frequency measurements on the cell transmitting the discovery signal.

For example, the first secondary cell 203 can transmit a discovery signal on a carrier with center frequency $f_1$ and with a periodicity of once every 150ms. The user device 200 connected to the primary cell 202 operating on a carrier with center frequency $f_2$ can attempt to detect the first secondary cell 203 by either attempting to detect PSS or SSS on the first secondary cell 203 or the discovery signal on the first secondary cell 203.

In another example implementation, the active-state transmissions made by a cell may be similar to the active-state transmissions described above, except that in the dormant state 301, the cell transmits other reference signals and channels in addition to the discovery signal. For example, the dormant state transmissions by the cell may include:

- Reduced-CRS transmissions (i.e., transmission of a pilot sequence in 5th subframe of every radio frame on resource elements corresponding to a CRS antenna port;

- New broadcast channel transmissions that are associated with Demodulation reference signals instead of CRS; and

- New control channel transmissions such as a common search space for Enhanced PDCCH.

Such transmissions can be used by advanced UEs (e.g., UEs supporting LTE Rel12) for connecting to and communicating with the cell even when it is in the dormant state. The energy spent by the cell in the dormant state of this implementation is higher than the energy spent in the dormant state of the previously described example. However, when compared to the energy spent in the active state of either, the energy spent is still lower.

It is possible to use a combination of the foregoing implementations. For example, a cell may be configured to support three states including:

- an active state (similar to the active state of the first example implementation);

- a semi-dormant state (similar to the dormant state of the second example implementation); and

- a dormant state (similar to the dormant state of the first example implementation).

In addition to the periodic non-UE specific transmissions discussed so far, a cell supports event-triggered transmissions such as Paging indications (when a paging message is received from a Public Land Mobile Network associated with the cell) and Random-Access Procedure ("RACH") response transmissions (when a RACH is received from a UE camped or connected to the cell). In some implementations (e.g., the second example above) such transmissions can be supported by the cell in both of the dormant and active states.

In other implementations, the cell may switch from the dormant state to the active state in response to such events and make the related transmissions in the active state. In some other implementations, the cell may remain in the dormant state for some events and switch to the active state for other events. For example, a cell may transmit a paging indication while in the dormant state, and then wait for a RACH transmission in response to the paging indication before switching to the active state to transmit a RACH response.

As noted above, a user device may be configured by its primary cell node to measure neighboring cells on a triggered basis to facilitate a later hand off. This is particularly true with respect to legacy LTE systems. However, in systems such as LTE Rel12 compliant systems, wherein cells support two states (e.g., dormant and active), the continuation by the UE of measurement via legacy procedures will cause unnecessary measurement reports. This is detrimental both to device performance and to network efficiency.

In an embodiment of the disclosed principles, the measurement triggers for measuring characteristics of non-primary cells are adapted based on cell state in systems supporting multistate cells. In particular, the disclosed examples discuss illustrative mechanisms to optimize the UE measurement reporting procedure for systems that include multistate cells.

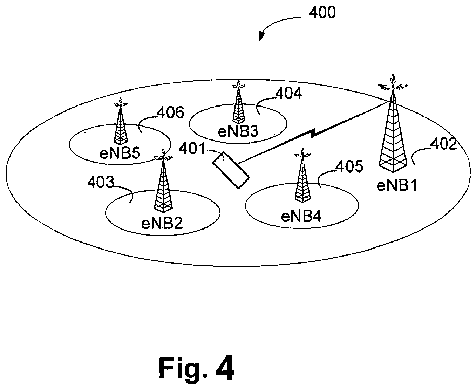

The simplified network diagram of Figure 4 shows a cellular network environment 400 wherein a mobile user device 401 is in proximity to a number of cells 402, 403, 404, 405, 406 (associated with nodes eNB1, eNB2, eNB3, eNB4, eNB5). The shorthand "eNB" refers to "evolved Node B," meaning an LTE-compliant node B.

In the illustrated state, the mobile user device 401 is connected to cell 402 (eNB1) and has as its neighboring cells each of cells eNB2, eNB3, eNB4, and eNB5. Because the user device 401 is mobile, it may at some point be more suitable to connect to a neighboring node rather than to the current primary node. Thus, the user device 401 is configured by the primary node eNB1 (402) to measure one or more characteristics of the neighboring nodes according to certain rules.

In particular, in an embodiment, when the device 401 performs measurements with respect to neighboring cells (e.g., Radio Resource Management measurements in connected mode or cell selection or reselection measurements in idle mode), measurement triggers are adapted based on whether measured multistate cells are in the dormant state (or "off" state) or the active state (or "on" state).

When the device 401 is in the connected mode as shown, the measurement trigger will generally determine whether the device 401 sends a measurement report corresponding to a neighbor cell to the primary cell. The device 401 employs different trigger conditions depending on whether the neighbor cell is in the active state or the dormant state.

For example, the user device 401 is configured in an embodiment such that when a neighbor cell of interest is in the active state, a measurement report is triggered when a measurement quantity associated with the neighbor cell exceeds a first threshold value (e.g., Reference Signal Received Power ("RSRP") measured from CRS, RSRP measured from small-cell discovery signal ("SCDS"), etc.). However, when the neighbor cell is in the dormant state, the user device 401 triggers a measurement report only when the measurement quantity associated with the neighbor cell exceeds a second threshold value that may be more stringent than the first threshold value. In this way, measurements may be triggered less frequently when the neighbor cell of interest is in the dormant state.

In this example, setting the second threshold higher (more difficult to meet) than the first threshold allows the network to enforce a preference to handover the user device 401 to an active cell rather than to a dormant cell. The second threshold may be an absolute threshold or an offset related to the first threshold. The offset or delta between the first threshold and the second threshold may be predetermined or signaled to the user device 401. Moreover, the offset may be configured on a per-cell basis or may be common for all or a subset of the cells (e.g., for a certain frequency layer of cells).

When the user device 401 is in the idle mode, the measurement trigger determines whether the user device 401 reselects from the current camped cell (associated with eNB1) to another cell. The reselection criteria, like the measurement criteria, may be different based on whether the other cell is in active or dormant state.

It will be appreciated, as alluded to above, that different cells may operate on different frequencies. For the sake of example assume that eNB1 operates on a carrier frequency $f_1$, eNB2 and eNB3 operate cells on the same carrier frequency, and eNB4 and eNB5 operate cells on a different carrier frequency $f_2$.

In legacy LTE systems, the user device 401 is configured by its primary cell 402 to measure some or all of its neighbor cells and report the measurements, e.g., according to predefined events such as when cell offsets change, signal magnitudes change, relative measurements of these values change, and so on (depending upon how the primary cell actually configures the device 401). The interested reader may review LTE specification 3GPP TS 36.331 to learn more about these events, but in general they relate to signal strength and offset, compared to threshold values and compared to other cells.

Considering the system of Figure 4, assume that cells 402, 404, and 406 are in the active state, while cells 403 and 405 are in the dormant state. For such a system, applying the same measurement triggering and reporting procedure for both dormant and active cells may not be efficient. For example, considering that cell 402 is the primary cell of the user device 401, if the user device 401 measures cells 404 and 405, and if both cells are 3dB better than cell 402, then the user device 401 would include both cells in its measurement report using legacy procedures because the signal-characteristic thresholds for reporting are met.

However, in a system wherein multistate cells exist, the primary cell may prefer to hand over the user device to an active cell rather than to a dormant cell. If the primary cell is aware of the state of the cells included in the device's measurement report, it can enforce this preference to reduce unnecessary signaling overhead and also to improve device- and network-energy efficiency. The primary cell may determine the state of other cells either via inter-eNB signaling or via additional bits included in the device's measurement report.

For example, if the user device determines that a cell is in the dormant state and also determines that the cell satisfies a particular measurement event, it may include an additional dormant state indicator (for example, via an extra bit in the measurement report) to inform the primary cell that the report corresponds to a dormant cell. Allowing the user device to indicate cell state reduces the need for frequent signaling among cells to exchange their states.

Consider an event that entails comparison of the signal magnitude of the neighbor, frequency-specific offset of the neighbor and cell-specific offset of the neighbor less a hysteresis value to prevent oscillation, with the signal magnitude of the primary, frequency-specific offset of the primary and cell-specific offset of the primary plus an offset. In legacy systems, the user device 401 sends a measurement report if at least the following condition is satisfied:

$$Mn + Ofn + Ocn - Hys > Mp + Ofp + Ocp + Off$$

Where Mn is the measurement result of the neighboring cell (no offsets), Ofn is the frequency-specific offset of the frequency of the neighbor cell, Ocn is the cell-specific offset of the neighbor cell (set to zero if not configured for the neighbor cell), Mp is the measurement result of the primary cell (no offsets), Ofp is the frequency-specific offset of the primary frequency, Ocp is the cell-specific offset of the Primary cell (set to zero if not configured for the Primary cell), Hys is the hysteresis parameter for this event, and Off is the offset parameter for this event. The values Mn and Mp are expressed in dBm in case of RSRP or in dB in case of Reference Signal Received Quality ("RSRQ"). The values of Ofn, Ocn, Ofp, Ocp, Hys and Off are expressed in dB.

For example, reporting is more efficiently triggered by applying a different triggering approach as summarized by the following expression for the same example event:

$$Mn + Ofn + Ocn - Hys > Mp + Ofp + Ocp + Off + dormant\_delta$$

where dormant_delta is set to 0 if the measured cell is in the active state and is set to a network configured value (e.g., 2dB) if the cell is in the dormant state. Another option is to have a larger hysteresis values for dormant cells as shown in the inequality below:

$$Mn + Ofn + Ocn - (Hys + Hys\_delta) > Mp + Ofp + Ocp + Off$$

where Hys_delta is set to 0 if the measured cell is in the active state and is set to a network configured value (e.g., 2dB) if the cell is in the dormant state.

In an alternative approach, the network can configure the UE with two different cell-specific offset Oc values, one for the dormant state and another for the active state. For example, for the neighbor cell "cell n," the user device 401 can be configured with two cell-specific offset values, Ocn1 (corresponding to the dormant state) and Ocn2 (corresponding to the active state).

Optionally, the primary cell can be configured with Ocp1 (corresponding to the dormant state) and Ocp2 (corresponding to the active state). The user device 401 determines whether the cell is in the active or dormant state and uses the appropriate offset value while evaluating a measurement trigger condition involving that cell.

For example, in keeping with the foregoing, if the primary cell is in the active state and the neighbor cell n is in the dormant state, then the user device 401 can apply the following expression as a trigger condition for sending a measurement report:

$$Mn + Ofn + Ocn1 - Hys > Mp + Ofp + Ocp2 + Off$$

If the primary cell is in the active state and neighbor cell n is also in the active state, then the user device 401 instead applies the following expression as a trigger condition for sending a measurement report:

$$Mn + Ofn + Ocn2 - Hys > Mp + Ofp + Ocp2 + Off$$

In some cases, the user device 401 needs to compare a measurement quantity to a threshold value rather than perform a cross-cell comparison. For such trigger conditions, the user device 401 may be configured with a first threshold value corresponding to a dormant-state measurement and a second threshold value corresponding to an active-state measurement.

For example, one event of interest is when the primary cell becomes worse than a threshold1 and a neighbor cell becomes better than a threshold2. In keeping with the disclosed principles, this event is detected by configuring the user device 401 with two different thresholds 'threshold 1a' and 'threshold1d' that apply to Primary cell measurements and two different thresholds 'threshold 2a' and 'threshold2d' that apply to neighbor-cell measurements. The user device 401 determines if the measurement trigger condition is satisfied using the following conditions:

- If both the primary cell and the neighbor cell are in the dormant state, then the trigger condition is satisfied when the primary cell signal strength becomes worse than threshold1d and the neighbor cell signal strength becomes better than threshold2d;

- If both primary cell and the neighbor cell are in the active state, then the trigger condition is satisfied when the primary cell signal strength becomes worse than threshold1a and the neighbor cell signal strength becomes better than threshold2a;

- If the primary cell is in the active state and the neighbor cell is in the dormant state, then the trigger condition is satisfied when the primary cell signal strength becomes worse than threshold1a and the neighbor cell signal strength becomes better than threshold2d; and

- If the primary cell is in dormant state and the neighbor cell is in the active state, then the trigger condition is satisfied when the primary cell signal strength becomes worse than thresholdld and the neighbor cell signal strength becomes better than threshold2a.

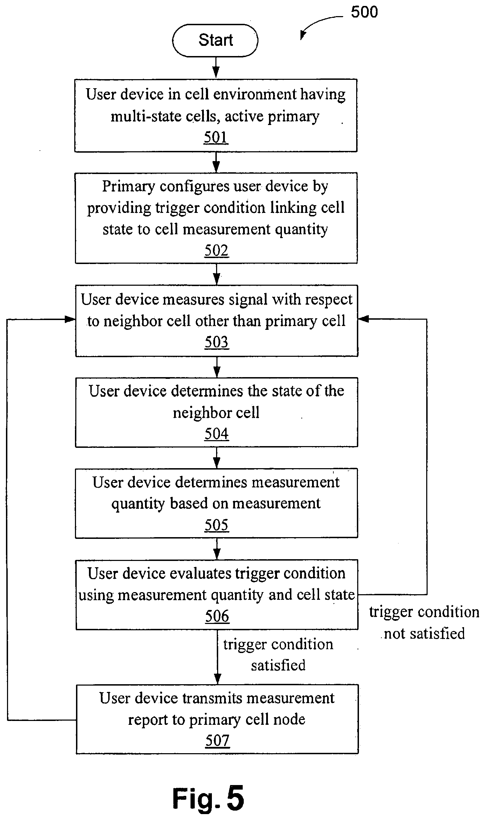

Although these principles may be applied in a number of different ways, an illustrative mode of application is shown in the flowchart 500 of Figure 5. The disclosed process begins at stage 501, wherein a user device such as device 401 is operating in a cellular environment supporting multistate cells and having one or more dormant cells and one or more active cells. The user device is connected to one of the active cells (the primary cell).

At stage 502 of the process 500, the primary cell configures the user device for efficient neighbor-cell measurement reporting by providing a trigger condition linking the cell state to a cell-measurement quantity, e.g., signal strength or frequency offset. As noted, examples of signals that may be measured include a CRS, PSS, SSS, SCDS, positioning reference signal, and channel-state information reference signal. The user device measures a signal with respect to a cell other than the primary cell at stage 503 and determines a state of the measured cell at stage 504. It will be appreciated that stages 503 and 504 may occur in any order or may occur in parallel. At stage 505, the user device determines the measurement quantity based on the measurement.

The user device then evaluates the trigger condition using both the measurement quantity and the cell state at stage 506. If the trigger condition is satisfied, then the user device transmits a measurement report to the primary cell node at stage 507. Otherwise, the user device does not send a measurement report, and the process 500 returns to stage 503. This process will continue until the primary cell reconfigures the user device or the device leaves the primary cell or is powered down.

In legacy systems, after measuring a particular RSRP or RSRQ value, the user device applies a filtering function (layer-3 filtering) such as shown below:

$$F_n = (1-a) \cdot F_{n-1} + a \cdot M_n.$$

Here, $a = 1/2^{(k/4)}$, and the parameter $k$ (a value between 0 and 19) is configured by the network separately for RSRP and RSRQ measurements. For intra-frequency RSRP measurements, the filter coefficient is set by the network assuming a sample rate of 200ms.

In systems where dormant and active cells are present, the network can configure a different filter coefficient for filtering measurements of dormant and active cells. For example the network may configure the UE to choose k=4 for measurements on active cells and k=0 for measurements on dormant cells given the longer periodicity of samples measured on dormant cells.

In an alternative approach, the UE may adapt the layer-3 filter such that the time characteristics of the filter are preserved at different input rates corresponding to the dormant and active state of the cell.

New triggering criterion may be employed with systems with active and dormant cells. For example, in an application example, when a dormant cell becomes better by an offset than any active cell, the user device sends a measurement report corresponding to the dormant neighbor cell. In particular, if a dormant cell is 3dB better than any of the active cells, then it may be beneficial from a network efficiency perspective to wake up the dormant cell (either via inter-eNB signaling or via UE-based triggering) and have the user device trigger a measurement report in this case.

In view of the many possible embodiments to which the principles of the present disclosure may be applied, it should be recognized that the embodiments described herein with respect to the drawing figures are meant to be illustrative only and should not be taken as limiting the scope of the claims. Therefore, the techniques as described herein contemplate all such embodiments as may come within the scope of the following claims.

## Claims

1. A method (500) for measurement reporting performed by a cellular user device connected to a primary cell, said cellular user device being within receiving range of a second cell, and configured (502) by the primary cell by receiving: a trigger condition linking a cell state to a cell measurement quantity, a first cell-specific offset value and a second cell-specific offset value; the method comprising:

   measuring (503) a signal from the second cell;
   determining (505) a measurement quantity based on the measurement;
   determining (504) a cell state associated with the second cell;
   evaluating (506) the trigger condition using both the measurement quantity and the cell state; and

transmitting (507) a measurement report to the primary cell if the trigger condition is satisfied,

wherein determining (504) a cell state associated with the second cell comprises determining whether the second cell is in an active state or in a dormant state:

wherein the first cell-specific offset value is for the active state and the second cell-specific offset value is for the dormant state; and

wherein evaluating (506) the trigger condition using both the measurement quantity and the cell state further comprises evaluating the trigger condition using the first cell-specific offset value if the second cell is in active state and evaluating the trigger condition using the second cell-specific offset value if the second cell is in dormant state.

2. The method of claim 1 wherein the active state is a state wherein the second cell transmits reference signals with a periodicity that is equal to or shorter than 5ms and the dormant state is a state wherein the second cell transmits reference signals with a periodicity greater than 5ms.

3. The method of claim 1, wherein the measured signal is one of the following signals corresponding to the second cell : a common reference signal, a primary synchronization signal, a secondary synchronization signal, a small-cell discovery signal, a positioning reference signal, and a channel-state information reference signal.

4. The method of claim 1 wherein determining a measurement quantity comprises determining one of the following measurement quantities: a reference signal received power and a reference signal received quality.

5. A method for configuring a cellular user device for measurement reporting, the cellular user device being connected to a primary cell and being within receiving range of a second cell, the method comprising transmitting a configuration from the primary cell to the cellular user device, the configuration including information for determining a trigger condition for reporting a measurement of a signal of the second cell, the trigger condition being based upon both the measurement quantity and a cell state associated with the second cell, wherein the cell state associated with the second cell is one of an active state and a dormant state, and wherein the information for determining the trigger condition includes a first cell-specific offset value for use if the second cell is in the active state and a second cell-specific offset value for use if the second cell is in the dormant state.

6. The method of claim 5 wherein in the active state, the second cell transmits reference signals with a periodicity equal to or shorter than 5ms, and in the dormant state the second cell transmits reference signals with a periodicity greater than 5ms.

7. The method of claim 5 or 6, wherein the signal of the second cell is one of a common reference signal, a primary synchronization signal, a secondary synchronization signal, a small-cell discovery signal, a positioning reference signal, and a channel-state information reference signal.

8. The method of claim 5 wherein one of a reference signal received power and a reference signal received quality is determined based on the measurement.

9. A cellular user device (110) comprising:

a processor (140); and

a measurement module (130) run by the processor, the measurement module (130) being configured to measure a signal of a second cell while the cellular user device is connected to a primary cell, to determine a measurement quantity based on the measurement, to determine a cell state associated with the second cell, wherein the cell state associated with the second cell is one of an active state and a dormant state, and to determine whether to transmit a measurement report to the primary cell by evaluating a trigger condition, wherein the trigger condition depends upon both the measurement quantity and the state of the second cell; wherein

the measurement module (130) is configured to evaluate the trigger condition using a first cell-specific offset value if the second cell is in active state and using a second cell-specific offset value if the second cell is in dormant state; and

a cellular network interface (180) configured to: receive a configuration from the primary cell, the configuration including information for determining the trigger condition, said information including the first cell-specific offset value and the second cell-specific offset value; and transmit the measurement report to the primary cell if the measurement module (130) determines that trigger condition is satisfied.

**10.** The cellular user device (110) in accordance with claim 9, wherein the second cell transmits reference signals with a periodicity equal to or shorter than 5ms, and a dormant state, wherein the neighbor cell transmits reference signals with a periodicity greater than 5ms.

**Patentansprüche**

**1.** Verfahren (500) zum Berichten von Messungen, die von einer zellularen Benutzervorrichtung durchgeführt werden, die mit einer Primärzelle verbunden ist, wobei sich die zellulare Benutzervorrichtung innerhalb des Empfangsbereichs einer zweiten Zelle befindet, und konfiguriert ist (502) durch die Primärzelle durch Empfangen einer Triggerbedingung, die einen Zellzustand mit einer Zellmessgröße, einem ersten zellspezifischen Offsetwert und einem zweiten zellspezifischen Offsetwert verknüpft; wobei das Verfahren umfasst:

Messen (503) eines Signals von der zweiten Zelle;
Bestimmen (505) einer Messgröße basierend auf der Messung;
Bestimmen (504) eines Zellzustands, der der zweiten Zelle zugeordnet ist;
Auswerten (506) der Triggerbedingung unter Verwendung sowohl der Messgröße als auch des Zellzustands; und
Übertragen (507) eines Messberichts an die Primärzelle, wenn die Triggerbedingung erfüllt ist,
wobei das Bestimmen (504) eines Zellzustands, der der zweiten Zelle zugeordnet ist, das Bestimmen umfasst, ob sich die zweite Zelle in einem aktiven Zustand oder in einem ruhenden Zustand befindet; wobei der erste zellspezifische Offsetwert für den aktiven Zustand und der zweite zellspezifische Offsetwert für den ruhenden Zustand gilt; und
wobei das Bewerten (506) der Triggerbedingung unter Verwendung sowohl der Messgröße als auch des Zellzustands ferner das Bewerten der Triggerbedingung unter Verwendung des ersten zellspezifischen Offsetwerts, wenn sich die zweite Zelle im aktiven Zustand befindet, und das Bewerten der Triggerbedingung unter Verwendung des zweiten zellspezifischen Offsetwerts, wenn sich die zweite Zelle im Ruhezustand befindet, umfasst.

**2.** Verfahren nach Anspruch 1, wobei der aktive Zustand ein Zustand ist, in dem die zweite Zelle Referenzsignale mit einer Periodizität überträgt, die gleich oder kürzer als 5 ms ist, und der Ruhezustand ein Zustand ist, in dem die zweite Zelle Referenzsignale mit einer Periodizität von mehr als 5 ms überträgt.

**3.** Verfahren nach Anspruch 1, wobei das gemessene Signal eines der folgenden Signale ist, die der zweiten Zelle entsprechen: ein gemeinsames Referenzsignal, ein primäres Synchronisationssignal, ein sekundäres Synchronisationssignal, ein Kleinzellen-Erkennungssignal, ein Positionsreferenzsignal und ein Kanalzustand-Informationsreferenzsignal.

**4.** Verfahren nach Anspruch 1, worin das Bestimmen einer Messgröße das Bestimmen einer der folgenden Messgrößen umfasst: eine empfangene Referenzsignalleistung und eine empfangene Referenzsignalqualität.

**5.** Verfahren zum Konfigurieren einer zellularen Benutzervorrichtung für die Messberichterstattung, wobei die zellulare Benutzervorrichtung mit einer Primärzelle verbunden ist und sich im Empfangsbereich einer zweiten Zelle befindet, wobei das Verfahren das Übertragen einer Konfiguration von der Primärzelle an die zellulare Benutzervorrichtung umfasst, wobei die Konfiguration Informationen zum Bestimmen einer Triggerbedingung zum Melden einer Messung eines Signals der zweiten Zelle beinhaltet, wobei die Triggerbedingung sowohl auf der Messgröße als auch auf einem der zweiten Zelle zugeordneten Zellzustand basiert, wobei der der zweiten Zelle zugeordnete Zellzustand einer von einem aktiven Zustand und einem Ruhezustand ist, und wobei die zum Bestimmen der Triggerbedingung verwendete Information einen ersten zellspezifischen Offsetwert zur Verwendung beinhaltet, wenn sich die zweite Zelle im aktiven Zustand befindet, und einen zweiten zellspezifischen Offsetwert zur Verwendung, wenn sich die zweite Zelle im Ruhezustand befindet.

**6.** Verfahren nach Anspruch 5, wobei im aktiven Zustand die zweite Zelle Referenzsignale mit einer Periodizität gleich oder kürzer als 5ms überträgt und im ruhenden Zustand die zweite Zelle Referenzsignale mit einer Periodizität größer als 5ms überträgt.

**7.** Verfahren nach Anspruch 5 oder 6, worin das Signal der zweiten Zelle eines von einem gemeinsamen Referenzsignal, einem primären Synchronisationssignal, einem sekundären Synchronisationssignal, einem Kleinzellen-Entdeckungssignal, einem Positionsreferenzsignal und einem Kanalzustand-Informationsreferenzsignal ist.

8. Verfahren nach Anspruch 5, worin eines aus einer empfangenen Referenzsignalleistung und einer empfangenen Referenzsignalqualität basierend auf der Messung bestimmt wird.

9. Zelluläre Benutzervorrichtung (110), umfassend:

einen Prozessor (140); und

ein Messmodul (130), das vom Prozessor betrieben wird, wobei das Messmodul (130) konfiguriert ist, um ein Signal einer zweiten Zelle zu messen, während die zellulare Benutzervorrichtung mit einer primären Zelle verbunden ist, um eine Messgröße basierend auf der Messung zu bestimmen, um einen Zellzustand zu bestimmen, der der zweiten Zelle zugeordnet ist, wobei der Zellzustand, der der zweiten Zelle zugeordnet ist, einer von einem aktiven Zustand und einem Ruhezustand ist, und um zu bestimmen, ob ein Messbericht an die primäre Zelle durch Auswerten einer Triggerbedingung übertragen werden soll, wobei die Triggerbedingung sowohl von der Messgröße als auch vom Zustand der zweiten Zelle abhängt; wobei

das Messmodul (130) konfiguriert ist, um die Triggerbedingung unter Verwendung eines ersten zellspezifischen Offsetwerts auszuwerten, wenn sich die zweite Zelle im aktiven Zustand befindet, und unter Verwendung eines zweiten zellspezifischen Offsetwerts, wenn sich die zweite Zelle im ruhenden Zustand befindet; und

eine Mobilfunkschnittstelle (180), die konfiguriert ist, um: eine Konfiguration von der Primärzelle zu empfangen, wobei die Konfiguration Informationen zum Bestimmen der Triggerbedingung beinhaltet, wobei die Informationen den ersten zellspezifischen Offsetwert und den zweiten zellspezifischen Offsetwert beinhalten; und den Messbericht an die Primärzelle zu übertragen, wenn das Messmodul (130) bestimmt, dass die Triggerbedingung erfüllt ist.

10. Zelluläre Benutzervorrichtung (110) nach Anspruch 9, wobei die zweite Zelle Referenzsignale mit einer Periodizität gleich oder kürzer als 5ms und einem Ruhezustand überträgt, wobei die Nachbarzelle Referenzsignale mit einer Periodizität größer als 5ms überträgt.

**Revendications**

1. Un procédé (500) de communication de mesures effectués par un dispositif utilisateur cellulaire connecté à une cellule primaire, ledit dispositif utilisateur cellulaire étant dans la portée de réception d'une deuxième cellule, et configuré (502) par la cellule primaire par le fait de recevoir : une condition de déclenchement reliant un état de cellule à une grandeur de mesure de cellule, une première valeur de décalage spécifique à une cellule et une deuxième valeur de décalage spécifique à une cellule ; le procédé comprenant :

le fait (503) de mesurer un signal provenant de la deuxième cellule ;
le fait (505) de déterminer une grandeur de mesure sur la base de la mesure ;
le fait (504) de déterminer un état de cellule associé à la deuxième cellule ;
le fait (506) d'évaluer la condition de déclenchement en utilisant à la fois la grandeur de mesure et l'état de la cellule ; et
le fait (507) de transmettre une communication de mesure à la cellule primaire si la condition de déclenchement est satisfaite,
le fait (504) de déterminer un état de cellule associé à la deuxième cellule comprend le fait de déterminer si la deuxième cellule est dans un état actif ou dans un état dormant ;
la première valeur de décalage spécifique à la cellule étant pour l'état actif et la deuxième valeur de décalage spécifique à la cellule étant pour l'état dormant ; et
le fait (506) d'évaluer la condition de déclenchement en utilisant à la fois la grandeur de mesure et l'état de la cellule comprend en outre le fait d'évaluer la condition de déclenchement en utilisant la première valeur de décalage spécifique à la cellule si la deuxième cellule est dans un état actif et le fait d'évaluer la condition de déclenchement en utilisant la deuxième valeur de décalage spécifique à la cellule si la deuxième cellule est dans un état dormant.

2. Le procédé selon la revendication 1, dans lequel l'état actif est un état dans lequel la deuxième cellule transmet des signaux de référence avec une périodicité qui est égale ou inférieure à 5 ms et l'état dormant est un état dans lequel la deuxième cellule transmet des signaux de référence avec une périodicité supérieure à 5 ms.

3. Le procédé selon la revendication 1, dans lequel le signal mesuré est l'un des signaux suivants correspondant à la deuxième cellule : un signal de référence commun, un signal de synchronisation primaire, un signal de synchronisation secondaire, un signal de découverte de petites cellules, un signal de référence de positionnement et un signal de référence d'information d'état de canal.

**4.** Le procédé selon la revendication 1, dans lequel le fait de déterminer une grandeur de mesure comprend le fait de déterminer l'une des grandeurs de mesure suivantes : une puissance reçue du signal de référence et une qualité reçue du signal de référence.

**5.** Un procédé pour configurer un dispositif utilisateur cellulaire pour la communication de mesures, le dispositif utilisateur cellulaire étant connecté à une cellule primaire et se trouvant dans la portée de réception d'une deuxième cellule, le procédé comprenant le fait de transmettre une configuration depuis la cellule primaire vers le dispositif utilisateur cellulaire, la configuration comprenant des informations pour déterminer une condition de déclenchement pour communiquer une mesure d'un signal de la deuxième cellule, la condition de déclenchement étant basée à la fois sur la grandeur de mesure et sur un état de cellule associé à la deuxième cellule, l'état de cellule associé à la deuxième cellule étant l'un parmi un état actif et un état dormant, et les informations pour déterminer la condition de déclenchement comprenant une première valeur de décalage spécifique à une cellule à utiliser si la deuxième cellule est dans l'état actif et une deuxième valeur de décalage spécifique à une cellule à utiliser si la deuxième cellule est dans l'état dormant.

**6.** Le procédé selon la revendication 5, dans lequel, dans l'état actif, la deuxième cellule transmet des signaux de référence avec une périodicité égale ou inférieure à 5 ms, et dans l'état dormant, la deuxième cellule transmet des signaux de référence avec une périodicité supérieure à 5 ms.

**7.** Le procédé selon la revendication 5 ou la revendication 6, dans lequel le signal de la deuxième cellule est l'un parmi : un signal de référence commun, un signal de synchronisation primaire, un signal de synchronisation secondaire, un signal de découverte de petites cellules, un signal de référence de positionnement et un signal de référence d'information d'état de canal.

**8.** Le procédé selon la revendication 5, dans lequel l'une parmi une puissance reçue de signal de référence et d'une qualité reçue de signal de référence est déterminée sur la base de la mesure.

**9.** Le dispositif utilisateur cellulaire (110) comprenant :

un processeur (140) ; et
un module de mesure (130) exécuté par le processeur, le module de mesure (130) étant configuré pour mesurer un signal d'une deuxième cellule tandis que le dispositif utilisateur cellulaire est connecté à une cellule primaire, pour déterminer une grandeur de mesure basée sur la mesure, afin de déterminer un état de cellule associé à la deuxième cellule, l'état de cellule associé à la deuxième cellule est l'un parmi un état actif et un état dormant, et pour déterminer s'il faut transmettre une communication de mesure à la cellule primaire en évaluant une condition de déclenchement, la condition de déclenchement dépendant à la fois de la grandeur de mesure et de l'état de la deuxième cellule,
le module de mesure (130) étant configuré pour évaluer la condition de déclenchement en utilisant une première valeur de décalage spécifique à une cellule si la deuxième cellule est dans un état actif et en utilisant une deuxième valeur de décalage spécifique à une cellule si la deuxième cellule est dans un état dormant ; et
une interface (180) de réseau cellulaire configurée pour : recevoir une configuration en provenance de la cellule primaire, la configuration comprenant des informations pour déterminer la condition de déclenchement, lesdites informations comprenant la première valeur de décalage spécifique à la cellule et la deuxième valeur de décalage spécifique à la cellule ; et transmettre la communication de mesure à la cellule primaire si le module de mesure (130) détermine que la condition de déclenchement est remplie.

**10.** Le dispositif utilisateur cellulaire (110) selon la revendication 9, dans lequel la deuxième cellule transmet des signaux de référence avec une périodicité égale ou inférieure à 5 ms, et un état dormant, la cellule voisine transmettant des signaux de référence avec une périodicité supérieure à 5 ms.

Fig. 1

**Fig. 2**

Fig. 3

400

404

406

eNB3

eNB5

401

402

403

eNB2

405

eNB4

eNB1

**Fig. 4**

500

Start

User device in cell environment having
multi-state cells, active primary
501

Primary configures user device by
providing trigger condition linking cell
state to cell measurement quantity
502

User device measures signal with respect
to neighbor cell other than primary cell
503

User device determines the state of the
neighbor cell
504

User device determines measurement
quantity based on measurement
505

User device evaluates trigger condition
using measurement quantity and cell state
506

trigger condition
not satisfied

trigger condition
satisfied

User device transmits measurement
report to primary cell node
507

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2439975 A1